# EUROPEAN PATENT APPLICATION

(11) **EP 1 760 869 A1**
(43) Date of publication of application: **07.03.2007**
(21) Application number: 05388071.2
(22) Date of filing: 05.09.2005
(51) Int. Cl.: H02M 3/335

(54) **A DC/DC power supply**

(71) Applicant: Ideassociates (IOM) Limited, Douglas, Isle of Man IM99 1RB (GB)
(72) Inventor: Fich, Preben Bo, Kent CT20 3AT (GB); Willadsen, Curt, Michael, Petersen, DK-3100 Horbaek (DK)
(74) Representative: Nielsen, Kim Garsdal

(57) **Abstract**

A DC/DC power supply comprising a transformer. The transformer has a primary winding with a first end and a second end and two secondary windings. Switching means are arranged in connection with said primary winding, and a diode is arranged in series with each of said secondary windings. The power supply comprises a voltage divider with a centre tab, to which said first end of said primary winding is connected. The second end of said primary winding is connectable to either side of said voltage divider via said switching means.

## Description

The invention relates to a DC/DC power supply comprising a transformer, where said transformer has a primary winding with a first end and a second end and two secondary windings, where switching means are arranged in connection with said primary winding, and where a diode is arranged in series with each of said secondary windings. In particular but not exclusively the invention relates to such a DC/DC power supply in connection with commutated DC motors used in furniture.

PWM or switch-mode controlled electric motors are well-known in the art and employed in a variety of electric drive applications including one or more electric DC motors. Typical applications, to which the present invention pertains, include drive arrangements for lifting and lowering of height adjustable furniture components like tabletops, chairs and other resting furniture for domestic, office and medical use, motion control of robot devices etc.

In such applications it is often necessary to place not only one or more motors, but also the power supply for these, in places where they form part of the moved mass, e.g. in connection with the tabletop of a table with a height adjustable tabletop.

Also, in order to avoid mechanical transmissions it is necessary to use several motors, e.g. two, one at each end of the tabletop. If two motors are, used they will often be subjected to different loads, and they must then be synchronized in their operation order to keep the tabletop level.

On this background it is the object of the present invention to provide a DC/DC power supply with which it is possible to control two motors.

According to the present invention, the above and other problems are overcome by a DC/DC power supply comprising a transformer, where said transformer has a primary winding with a first end and a second end and two secondary windings, where switching means are arranged in connection with said primary winding, and where a diode is arranged in series with each of said secondary windings, characterized in that the power supply comprises a voltage divider with a centre tab, to which said first end of said primary winding is connected, and in that the second end of said primary winding is connectable to either side of said voltage divider via said switching means.

With this arrangement it becomes possible by appropriate control of the switching means to supply two motors by means of a single transformer, thus reducing the moved mass of the arrangement. Moreover the arrangement of the switching devices in connection with the primary winding, allows removes any current consumption by the primary winding when the power supply is on stand-by.

According to a preferred embodiment, said switching means comprises two individually controlled electronic switches for connecting said second end of said primary winding to either side of said voltage divider. Using two individually controlled electronic switches allows the independent supply of each of the two electric motors. This again allows compensation for different loads on each electric motor.

According to a preferred embodiment, each of the electronic switches is controlled by means of a microprocessor. This allows quick and efficient adaptation of the supply to each of the electric motors according to the momentary load on that motor. Moreover, the use of microprocessors allows several loads to be operated in synchronicity. In that case one microprocessor is assigned to be master and the other slaves.

According to a further preferred embodiment, the DC/DC power supply further comprises means for detecting the rotation of at least one motor connected to said power supply. Thus, the rotational speed of the motor can be detected and thus the load thereon estimated, so as to adjust the current supply to the motor.

According to an especially preferred embodiment of the invention, said means for detecting the rotation of an attached motor comprises means for detecting the back electromotive force from said at least one electric motor. It has been found that in a commutated DC motor it is possible to detect the back electromotive force in connection with the commutation. Because the number of commutations is strictly linked to the construction of the motor, the number of commutations may directly serve as an indication of the rotation of the motor.

It has been found advantageous if, according to a further preferred embodiment, said means for detecting the back electromotive force comprises an inductor over which a voltage is measured. This turns out to be sufficient to allow the detection of commutation during the pauses in the current supply to the electric motor.

According to a further preferred embodiment, the microprocessor is adapted to control said at least one motor in dependence of said detection of the rotation of the motor armature. This allows the motor to be run in steps corresponding to a number of commutations, thus keeping track of the rotational angle, and consequently any directly linked motion, e.g. translatory motion via a gear train. In particular the number of steps may be one, the commutated DC motor then effectively functions as a stepper motor.

According to yet another preferred embodiment, the microprocessor is adapted to control a further motor in dependence of said detection of the rotation of the motor armature thereof, and in dependence of the rotation of the motor armature of said at least one motor. This allows two motors to effectively function as stepper motors and consequently to be operated in synchronicity.

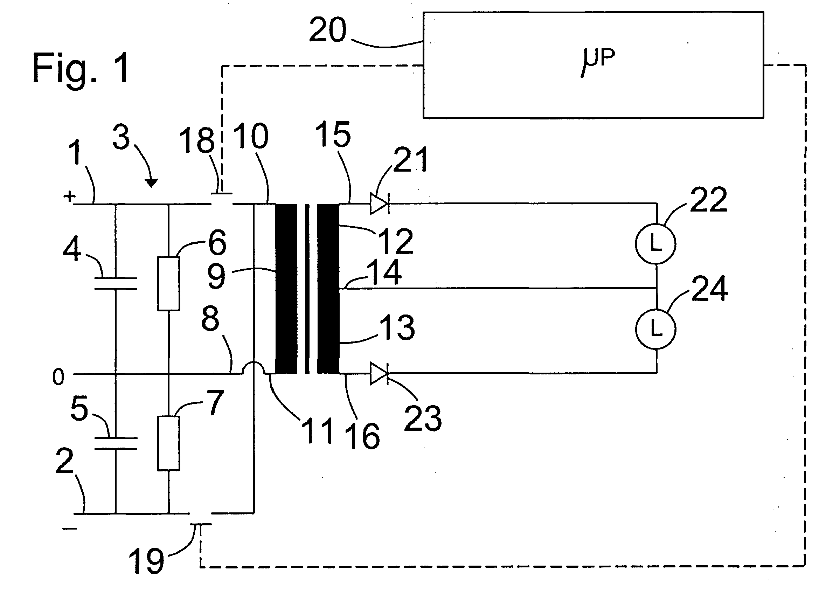

The invention will now be described in greater detail based on a non-limiting exemplary embodiment and with reference to the drawing. On the drawing
fig. 1 shows a schematic diagram of DC/DC power supply according to the present invention, and
fig. 2 shows a schematic diagram of a DC/DC power supply according the present invention, but especially adapted for the control of DC motors.

The DC/DC power supply is provided with DC, such as rectified mains, at the positive terminal 1 and the negative terminal 2. Between the positive terminal 1 and the negative terminal 2 there is provided a voltage divider 3. In the preferred embodiment the voltage divider 3 comprises two capacitors 4, 5 and two resistors 6, 7. Preferably the two capacitors 4, 5 have the same capacitance and the two resistors 6, 7 the same resistance. Thus, at the centre tab 8 of the voltage divider 3 there will be an intermediate potential. For illustration purposes, the intermediate potential is marked 0, but evidently the intermediate potential floats and is subject to variations depending on the current drawn from the voltage divider 3, unless it is stabilized by an external connection to a fixed reference potential.

The current is intermittently drawn from the voltage divider 3 by a transformer having a primary winding 9 with a first end 10 and a second end 11. The transformer has two secondary windings 12, 13 with a common terminal 14, and a first end terminal 15 and a second end terminal 16. The two secondary windings 12, 13 are preferably identical in number of turns and direction. The primary-to-secondary ratio is preferably 20:4/4 for the applications described, but may evidently differ from that ratio, depending on the actual application.

In order to allow the transformer to intermittently draw current from the voltage divider 3, the DC/DC power supply comprises two controlled switches 18, 19. The first controlled switch 18 is connected between the first end 10 of the primary winding 9 of the transformer and the positive terminal 1. The second controlled switch 19 is connected between the first end 10 of the primary winding 9 of the transformer and the negative terminal 2. Preferably the controlled switches 18, 19 are semiconductor switches controlled by means of a microprocessor 20. If galvanic separation between the primary winding 9 and secondary winding 12 of the transformer is desired, the control lines to the controlled switches 18, 19 may include optocouplers (not shown).

Both the controlled switches 18, 19 are operated intermittently by the microprocessor 20, e.g. according to a pulse width modulation scheme.

The microprocessor 20 ensures that the controlled switches 18, 19 are not active at the same time, but otherwise the microprocessor operates the controlled switches 18, 19 independently of each other.

When said first controlled switch is active, current flows from the positive terminal 1 through the primary winding 9 to the centre tab 8 of the voltage divider 3, giving rise to a flux with a first direction in the transformer, which in turn gives rise to a current in the secondary winding. The current flows in the first secondary winding 12, through a first diode 21 connected to the first end terminal 15 to a first load 22 and back to the common terminal 14. A second diode 23 prevents any current from running in the second secondary winding 13.

When said second controlled switch is active, current flows from the negative terminal 2 through the primary winding 9 to the centre tab 8 of the voltage divider 3, giving rise to a flux with a second direction in the transformer, which in turn gives rise to a current in the secondary winding. In this case the current flows in the second secondary winding 13, through the second diode 23 connected to the second end terminal 16 to a second load 23 and back to the common terminal 14. Here, the first diode 21 prevents any current from running in the first secondary winding 12.

Since the controlled switches 18, 19 may be controlled independently of each other, it is possible to control the supply to two loads 22, 24 independently of each other using only one single transformer. In particular, with appropriate choice of modulation and duty cycle, the two controlled switches 18, 19 may be controlled in an alternating manner, the first controlled switch 18 being in the active part of its duty cycle, while the second controlled switch 19 is in its inactive part of the duty cycle, and vice versa. However, it is just as well possible to have the first controlled switch 18 performing a number of duty cycles without the second controlled switch 19 being active at all, and vice versa.

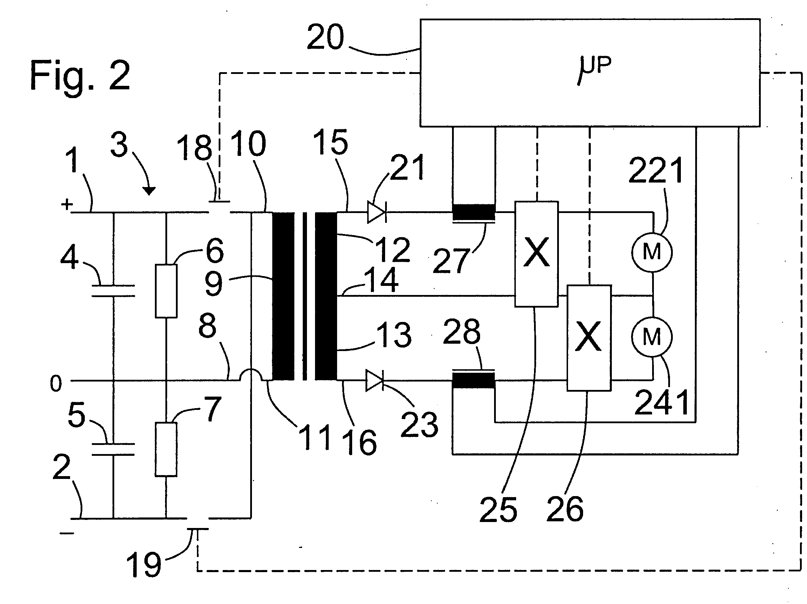

Fig. 2 shows an embodiment of the invention especially adapted for the control of electric DC motors. The general construction of the DC/DC power supply according to this embodiment is largely the same as for the embodiment first described. For the sake of clarity, the same reference numerals will be maintained for the same parts, and the description thereof will only be repeated to the extent necessary for the understanding of the differences.

In this embodiment the two unspecified loads 22 and 24 have been replaced by two commutated electric DC motors 221, 241, respectively. It should be noted, however, that the loads 22, 24, 221, 241 do not form part of the invention as such.

Since in many applications, such as the tabletops mentioned above, it is necessary to reverse the direction of rotation of the motor, change-over switches 25, 26 for reversing the polarity in the supply lines to the motors 221, 241 have been introduced. The change-over switches are preferably solid state switches controlled by the microprocessor 20. The microprocessor 20 is preferably adapted to operate the change-over switches 25, 26 in no-current conditions only in order to avoid unnecessary stress. The change-over switches 25, 26 do thus not have to have any load-breaking capacity. Moreover, the microprocessor prevents the two change-over switches 25, 26 from assuming conditions where the secondary windings 12, 13 are short circuited.

Bearing in mind the background of the invention, viz. height adjustable tabletops where two motors are used and must be synchronized in their operation order to keep the tabletop level, even when subjected to different loads, the embodiment of fig. 2 further comprises two inductors 27, 28 placed in series with a respective one of said first motor 221 and second motor 241. These inductors 27, 28 serve as means for measuring the back electromotive force from the respective commutated electric DC motors 221, 241. The inventors of the present invention have realized that the back electromotive force from the motors is readily detectable and may thus be used as a means for determining the angular position of the armature of the DC motor, provided of course that the number of commutations per revolution of the motor 221, 241 is known. The commutations are detected by the microprocessor 20 by means of a voltage measured over the inductors 27, 28, possibly using appropriate additional circuitry, not shown.

If one motor is subjected to a larger load than the other, and consequently runs slower, the microprocessor 20 may increase the duty cycle ratio for that motor, or decrease the duty cycle ratio for the other motor according to a predetermined scheme, which depends on the application, and does thus not form part of this invention. The duty cycle ratio being understood as the ratio between the time the switching means is active to the sum of an active-inactive cycle.

It should however be mentioned that as an alternative to adjusting the duty cycle ratio, it is possible to operate the two motors as stepper motors. Since each of the commutations of each electric motor is detected it is possible to stop the power supply to that motor at each and every commutation, or after a predetermined number of commutations. Then rather than adjusting the duty cycle ratio, the first motor to commutate may simply be left to wait until the other motor commutates.

Thus the first motor 221 and the second motor 241 will effectively work in synchronicity, as far as the overall angle of rotation is considered.

## Claims

1. A DC/DC power supply comprising a transformer, where said transformer has a primary winding with a first end and a second end and two secondary windings, where switching means are arranged in connection with said primary winding, and where a diode is arranged in series with each of said secondary windings, **characterized in that** said power supply comprises a voltage divider with a centre tab, to which said first end of said primary winding is connected, and **in that** the second end of said primary winding is connectable to either side of said voltage divider via said switching means.

2. A DC/DC power supply according to claim 1, **characterized in that** said switching means comprises two individually controlled electronic switches for connecting said second end of said primary winding to either side of said voltage divider.

3. A DC/DC power supply according to claim 2, **characterized in that** said two individually controlled switching means are controlled by means of a microprocessor.

4. A DC/DC power supply according to any one of the preceding claims, **characterized in** further comprising means for detecting the rotation of at least one motor connected to said power supply.

5. A DC/DC power supply according to claim 4, **characterized in that** said means for detecting the rotation of an attached motor comprises means for detecting the back electromotive force from said at least one electric motor.

6. A DC/DC power supply according to claim 5, **characterized in that** said means for detecting the back electromotive force comprises an inductor over which a voltage is measured.

7. A DC/DC power supply according to any one of claims 3 to 6, **characterized in that** the microprocessor is adapted to control said at least one motor in dependence of said detection of the rotation of the motor armature.

8. A DC/DC power supply according to any one of claims 3 to 7, **characterized in that** the microprocessor is adapted to control a further motor in dependence of said detection of the rotation of the motor armature thereof, and in dependence of the rotation of the motor armature of said at least one motor.
